# EUROPEAN PATENT APPLICATION

(11) **EP 1 748 433 A2**
(43) Date of publication of application: **31.01.2007**
(21) Application number: 06117381.1
(22) Date of filing: 18.07.2006
(51) Int. Cl.: G11B 20/10, H04N 7/52

(54) **Information playback method using information recording medium**

(30) Priority: 29.07.2005 JP 2005220361
(71) Applicant: KABUSHIKI KAISHA TOSHIBA, Tokyo 105-8001 (JP)
(72) Inventor: Nakamura, Seiichi Toshiba Corporation, Minato-ku Tokyo 105-8001 (JP); Mimura, Hideki Toshiba Corporation, Minato-ku Tokyo 105-8001 (JP); Kobayashi, Takero Toshiba Corporation, Minato-ku Tokyo 105-8001 (JP); Tsumagari, Yasufumi Toshiba Corporation, Minato-ku Tokyo 105-8001 (JP); Yamagata, Yoichiro Toshiba Corporation, Minato-ku Tokyo 105-8001 (JP); Taira, Kazuhiko Toshiba Corporation, Minato-ku Tokyo 105-8001 (JP)
(74) Representative: Henkel, Feiler & Hänzel

(57) **Abstract**

According to one embodiment, there is provided an information playback apparatus capable of playing back video data as a stream and playing back an application relating to the video data during playback of the video data. The apparatus includes a buffer portion (33, 34) configured to operate to, after completion of fetching of first video data and before entirely outputting the first video data, start and complete fetching of an application relating to second video data which is to be played back after the first video data.

## Description

One embodiment of the invention relates to an information playback method using an information recording medium.

In recent years, when information recorded in a recording medium, such as an optical disc, is played back, not only video data as a stream but also applications (a sub-picture, a still picture, character information, etc.) relating to the video data can easily be played back. There are various techniques for implementing such a playback process.

For example, Jpn. Pat. Appln. KOKAI Publication No. 2000-137632 discloses an optical disc including a moving picture data recording area, which collectively stores moving pictures, and a program recording area, which collectively stores programs relating to the moving picture data.

According to the technique disclosed in the above publication, if a playback apparatus reads a plurality of continuous items of video data in the form of a stream from an optical disc, it is necessary to also read, from the program recording area, programs which should be played back during the playback of the respective items of video data. Therefore, each time video data and the related program are read, the playback head considerably moves, which increases the seek time. As a result, an undesirable phenomenon occurs; that is, the playback picture becomes frequently discontinuous.

It is an object of the invention to provide an information playback technique for properly playing back video data as a stream and an application relating thereto.

In general, according to one embodiment of the invention, there is provided an information playback apparatus capable of playing back video data as a stream and playing back an application relating to the video data during playback of the video data. The apparatus includes a buffer portion configured to operate to, after completion of fetching of first video data and before entirely outputting the first video data, start and complete fetching of an application relating to second video data which is to be played back after the first video data.

The invention can be more fully understood from the following detailed description when taken in conjunction with the accompanying drawings, in which:
FIG. 1 is an exemplary block diagram showing a configuration of an information playback apparatus according to an embodiment of the invention;
FIG. 2 is an exemplary block diagram primarily showing a functional configuration of playback processing software 22 shown in FIG. 1;
FIG. 3 is an exemplary diagram showing the relationship between a plurality of items video data and a plurality of applications;
FIG. 4 is an exemplary diagram for explaining a problem in stream data, which may occur if video data and an application are multiplexed (MUX);
FIG. 5 is an exemplary diagram for explaining a configuration of stream data according to the embodiment; and
FIG. 6 is an exemplary diagram showing changes in the statuses of an AV buffer and an APP buffer according to the embodiment.

Various embodiments according to the invention will be described hereinafter with reference to the accompanying drawings.

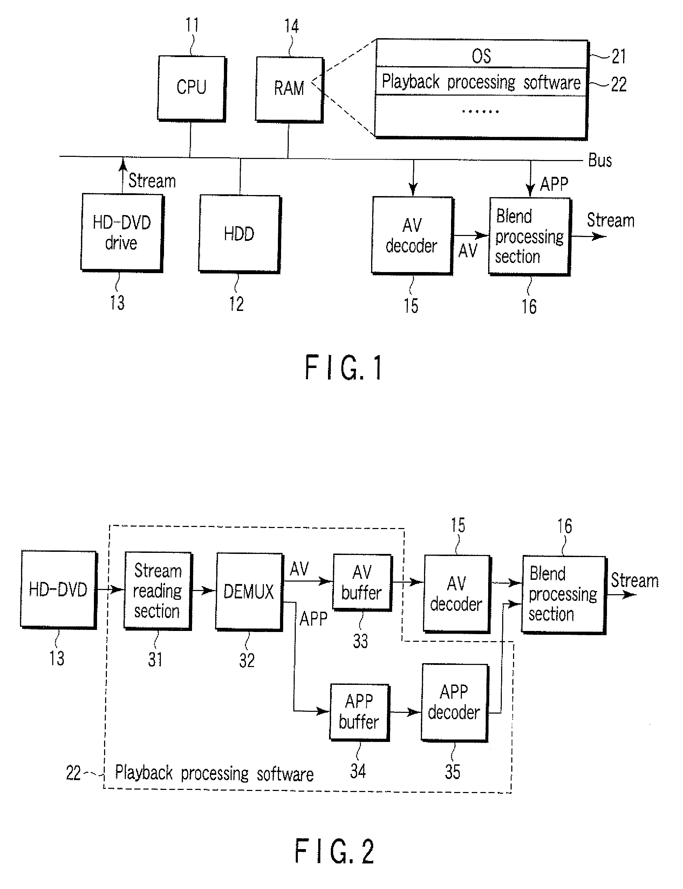

FIG. 1 is a block diagram showing a configuration of an information playback apparatus according to an embodiment of the invention.

The information playback apparatus is implemented as, for example, a personal computer or a playback-dedicated apparatus. The information playback apparatus is configured to play back audio/video (AV) contents (hereinafter referred to as "video data") as a stream, and also to play back applications relating to the video data during the playback of the video data. In this description, the applications represent objects, for example, a sub-picture (such as a commentary picture describing the work of the main picture and an advertisement) different from the main picture, character information (such as subtitles of news, weather forecasts and movies) and still pictures (graphic buttons and icons for the users to perform operations relating to playback processing). The applications may include software to control these objects.

The information playback apparatus includes a central processing unit (CPU) 11, a hard disk drive (HDD) 12, a high definition digital versatile disc (HD DVD) drive 13, a random access memory (RAM) 14, an AV decoder 15 and a blend processing section 16. The RAM 14 is loaded with an operating system (OS) 21 and playback processing software 22, which is managed under the OS 21. The playback processing software 22 will be described in detail later.

The CPU 11 controls the entire information playback apparatus. The CPU performs a process for playing back stream data that is read out from an HD DVD inserted in the HD DVD drive 13 by, for example, executing the playback processing software 22 in the RAM 14.

The HDD 12 stores programs and data necessary for various operations in the information playback apparatus. The programs and data can be read out when necessary.

The HD DVD drive 13 is a driver dedicated to driving information recording media (optical discs) in compliance with the HD DVD standard. Stream data, formed of a plurality of continuously arranged stream data units, is recorded in a spiral on a recording surface of a recording medium, which is driven by the HD DVD drive 13. Each stream data unit includes video data and an application to be played back during playback of video data as a stream. In each stream data unit, the application and the video data are arranged so as to ensure that the application is read out prior to the video data.

The RAM 14 serves as a main memory, which is used as a work area of the CPU 11.

The AV decoder 15 sequentially decodes and outputs video data transmitted via the playback processing software 22.

The blend processing section 16 receives video data from the AV decoder 15, and also an application to be played back during playback of the video data. The blend processing section 16 blends the application data and the video data input thereto, and outputs the blended data. The output data is sent to a display or a speaker as a stream.

FIG. 2 is a block diagram primarily showing a functional configuration of playback processing software 22 shown in FIG. 1. In FIG. 2, the same elements as those shown in FIG. 1 are identified by the same reference numerals as those used in FIG. 1.

The playback processing software 22 comprises a stream reader 31, a demultiplexer (DEMUX) 32, an AV buffer 33, an application (APP) buffer 34 and an application (APP) decoder 35.

The playback processing software 22 is not limited to the configuration shown in FIG. 2, but may be partially implemented as hardware. For example, the AV buffer 33 and/or the APP decoder 35 may be implemented as hardware.

The stream reader 31 reads the stream data from the information recording medium driven by the HD DVD drive 13, and outputs the read data.

The demultiplexer (DEMUX) 32 receives and demultiplexes the stream data read by the stream reader 31, and alternately outputs the application and the video data obtained by the demultiplexing process.

The AV buffer 33 fetches the video data output from the demultiplexer (DEMUX) 32, and temporarily stores and then sequentially outputs them. The AV buffer 33 operates to start fetching video data before the preceding video data has entirely been output from the AV buffer 33.

The APP buffer 34 fetches the applications output from the demultiplexer (DEMUX) 32, and temporarily stores and then successively outputs them. After the AV buffer 33 has completed fetching first video data and before the first video data has entirely been output from the AV buffer 33, the APP buffer 34 operates to start and complete fetching an application relating to second video data which is to be played back after the first video data.

The APP decoder 35 sequentially decodes the applications sent from the APP buffer 34 one by one, and sequentially outputs the decoded applications to the blend processing section 16.

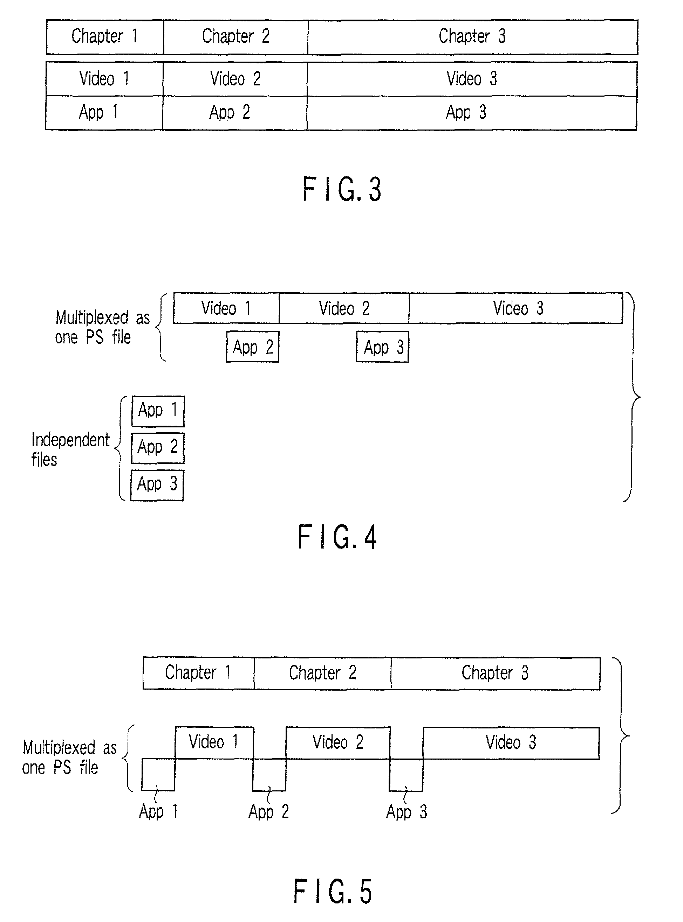

FIG. 3 is a diagram showing the relationship between each of a plurality of items video data and a plurality of applications.

A content such as a movie is generally constituted by a plurality of chapters (Chapter 1, Chapter 2, Chapter 3, ...). Video data (Video 1, Video 2, Video 3, ...), which correspond to the respective chapters, accompany applications (App 1, App 2, App 3, ...) to be played back during the playback of the video data.

FIG. 4 is a diagram for explaining a problem in stream data which may occur if video data and an application are multiplexed (MUX).

Assume that video data and applications as shown in FIG. 4 are multiplexed and supplied as one program stream (PS) file. An example will be described, in which the application App 2 relating to the Video 2 (or the Chapter 2) is multiplexed with the Video 1 and the application App 3 relating to the Video 3 (or the Chapter 3) is multiplexed with the Video 2 to supply a PS file. In this method, when the content is sequentially played back from the Chapter 1 to the Chapter 3, the video data and the applications can be played back continuously, because the necessary application is positioned before each chapter.

However, because the application App 3 relating to the Chapter 3 is multiplexed with the Video 2 of the Chapter 2, if the user instructs to start playback from the beginning of the Chapter 3, it is necessary to form the application App 3 as an independent file, read the file of the application App 3 first, and then start playing back the Chapter 3. In this case, the head to read information from the information recording medium first moves to the position where the application App 3 is recorded, and then to the leading portion of the Chapter 3. This movement is time-consuming.

The embodiment of the invention does not have a configuration as shown in FIG. 4, in which the application relating to each chapter is formed as an independent file. It employs a stream data configuration such that the application App 3 and the Chapter 3 can be immediately played back, if the user instructs to start playback from the beginning of the Chapter 3. The stream data configuration of this embodiment will be described below.

FIG. 5 is a diagram for explaining a configuration of stream data according to the embodiment.

In the stream data of this embodiment, as shown in FIG. 5, chapters are arranged in series, each chapter including video data corresponding to the chapter and an application corresponding to the chapter before the video data. More specifically, the application App 1, the Video 1, the application App 2, the Video 2, the application App 3 and the Video 3 are successively arranged in this order. With this arrangement, if the user instructs to start playback of the Chapter 3 from the beginning, the application App 3 relating to the Chapter 3 can be read out at once. Therefore, the application App 3 and the Video 3 can be played back immediately.

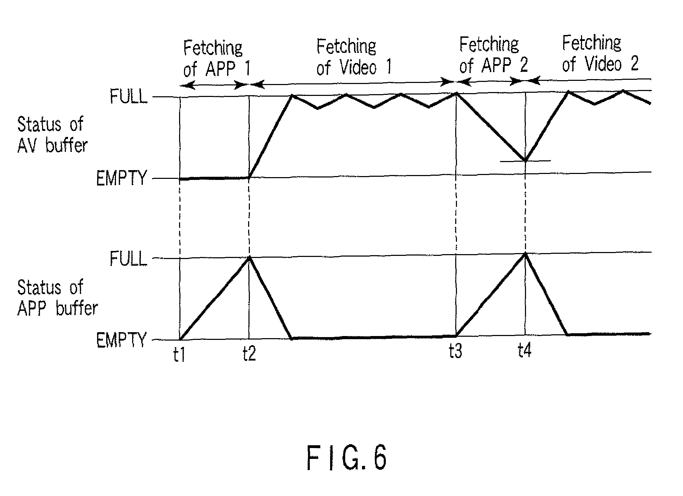

FIG. 6 is a diagram showing changes in the statuses of an AV buffer and an APP buffer according to the embodiment.

The HD DVD drive 13 can read data at a rate of about 30 Mbps. The AV decoder 15 can decode buffered data at a rate of about 20 Mbps. Since there is a difference between the reading rate and the decoding rate, the AV buffer 33 continuously stores video data almost to its fullest capacity. It takes a certain period of time for all video data to be entirely output from the AV buffer 33. In this period of time, according to this embodiment, the APP buffer 33 completely fetches the application relating to the video data, and thereafter the AV buffer 34 fetches next video data.

As shown in FIG. 6, in a period from a time point t1 to a time point t2, the APP buffer 34 fetches the application App 1.

When the APP buffer 34 completed the fetching of the application App 1, the AV buffer 33 fetches the Video 1 in a period from the time point t2 to a time point t3. In this period, the AV buffer 33 is substantially full. During this period, the application App 1 is output from the APP buffer 34 to the APP decoder 35, and no longer exists in the APP buffer 34.

When the AV buffer 33 completes the fetching of the Video 1, the APP buffer 34 fetches the application App 2 in a period from the time point t3 to a time point t4. In this period, the Video 1 is output from the AV buffer 33 to the AV decoder 15, and the remaining amount of the Video 1 in the AV buffer 33 is reduced. However, the Video 1 still exists therein at the time point t4.

When the APP buffer 34 completes the fetching of the application App 2, the AV buffer 33 fetches the Video 2 in a period from the time point t4 to a next time point. In this period, the AV buffer 33 is substantially full. During this period, the application App 2 is output from the APP buffer 34 to the APP decoder 35, and no longer exists in the APP buffer 34. Subsequently, the above operations of the APP buffer 34 and the AV buffer 33 are repeated.

In summary, with the operations described above, after the AV buffer 33 completes fetching of first video data and before the first video data has entirely been output from the AV buffer 33, the APP buffer 34 starts fetching of the application relating to second video data, which is to be played back after the first video data, and completes the fetching. The AV buffer 33 starts fetching of the second video data before the first video data has entirely been output from the AV buffer 33.

As described above in detail, according to the embodiment of the invention, when stream data is read out from an information recording medium, the movement of the head in the HD DVD drive 13 can be suppressed to a minimum, so that the seek time can be reduced. In addition, video data as a stream and an application relating thereto can be played back properly through the operations of the playback processing software 22.

## Claims

1. An information playback apparatus capable of playing back video data as a stream and playing back an application relating to the video data during playback of the video data, the apparatus **characterized by** comprising:
a data demultiplexer (32) to demultiplex stream data input thereto, the stream data being formed of a plurality of stream data units, each stream data unit including video data and an application to be played back during playback of the video data, the application and the video data being arranged to ensure that the application is read out prior to the video data, and to alternately output the applications and the video data; and
a buffer portion (33, 34) to alternately fetch the applications and video data, temporarily store them, and sequentially output them,
the buffer portion (33, 34) being configured to operate to, after completion of fetching of first video data and before entirely outputting the first video data, start and complete fetching of an application relating to second video data which is to be played back after the first video data.

2. The information playback apparatus according to claim 1, **characterized in that**:
the buffer portion (33, 34) comprises: a first buffer (34) to fetch the applications output from the data demultiplexer, temporarily store them, and sequentially output them; and a second buffer (33) to fetch the video data output from the data demultiplexer, temporarily store them, and sequentially output them; and
the first buffer (34) being configured to operate to, after completion of fetching of the first video data by the second buffer (33) and before entirely outputting the first video data from the second buffer (33), start and complete fetching of the application relating to the second video data which is to be played back after the first video data.

3. The information playback apparatus according to claim 2, **characterized in that** the second buffer (33) operates to start fetching of the second video data before the first video data is entirely output from the second buffer (33).

4. The information playback apparatus according to claim 1, **characterized by** further comprising a stream reader (31) to read the stream data from an information recording medium having a recording surface on which the stream data is recorded in a spiral.

5. An information playback method applied to an apparatus capable of playing back video data as a stream and playing back an application relating to the video data during playback of the video data, the program **characterized by** comprising:
inputting and demultiplexing (32) stream data, the input stream data being formed of a plurality of stream data units, each stream data unit including video data and an application to be played back during playback of the video data, the application and the video data being arranged to ensure that the application is read out prior to the video data, and alternately outputting the applications and the video data; and
performing a buffering operation (33, 34) to alternately fetch the applications and video data, temporarily store them, and sequentially outputting them, the buffering operation including, after completion of fetching of first video data and before entirely outputting the first video data, starting and completing fetching of an application relating to second video data which is to be played back after the first video data.

6. The information playback method according to claim 5, **characterized in that**:
the buffering operation (33, 34) includes: a first buffering (34) to fetch the output applications in a first buffer, temporarily store them, and sequentially output them; and a second buffering (33) to fetch the output video data in a second buffer, temporarily store them, and sequentially output them; and
the first buffering (34) includes an operation to, after completion of fetching of the first video data by the second buffer and before entirely outputting the first video data from the second buffer, start and complete fetching of the application relating to the second video data which is to be played back after the first video data.

7. The information playback method according to claim 6, **characterized in that** the second buffering (33) includes an operation to start fetching of the second video data before the first video data is entirely output from the second buffer.

8. The information playback method according to claim 5, **characterized by** further comprising reading (31) the stream data from an information recording medium, having a recording surface on which the stream data is recorded in a spiral.

9. An information recording medium having a recording surface, on which stream data formed of a plurality of continuously arranged stream data units is recorded in a spiral, each stream data unit including video data and an application to be played back during playback of video data, the application and the video data being arranged to ensure that the application is read out prior to the video data.
